Europäisches Patentamt

European Patent Office

Office européen des brevets

(11) Veröffentlichungsnummer: **0 255 649**
**A2**

## (12) EUROPÄISCHE PATENTANMELDUNG

(21) Anmeldenummer: 87110520.1

(22) Anmeldetag: 21.07.87

(51) Int. Cl.⁴: **G11B 3/46** , G11B 11/00

(30) Priorität: 02.08.86 DE 3626021

(43) Veröffentlichungstag der Anmeldung:
10.02.88 Patentblatt 88/06

(84) Benannte Vertragsstaaten:
AT BE CH DE ES FR GB GR IT LI LU NL SE

(71) Anmelder: TELDEC Schallplatten GmbH
Heussweg 25
D-2000 Hamburg 20(DE)

(72) Erfinder: Redlich, Horst, Ing.
Plassstrasse 3a
D-1000 Berlin 37(DE)
Erfinder: Joschko, Günter, Dipl.-Phys.
Silvesterweg 7
D-1000 Berlin 28(DE)

(74) Vertreter: Meyer, Ludgerus
Jungfernstieg 38
D-2000 Hamburg 36(DE)

(54) **Anordnung zur Aufzeichnung eines Informationssignales.**

(57) Es wird eine Anordnung zur Aufzeichnung eines digitalen Informationssignals, insbesondere auf einen plattenförmigen, metallischen Aufzeichnungsträger mit Hilfe eines Eindringkörpers (2) angegeben, bei dem dieser vorzugsweise eine Pyramidenform mit drei Seitenflächen (5, 7, 8) und drei Kanten (6, 19, 20) aufweist. Die die Kufe des Eindringkörpers bildende Kante (6) liegt in ihrer Projektion auf den Aufzeichnungsträger in Richtung des Geschwindigkeitsvektors am Ort der Aufzeichnung. Die Kante 6 bildet mit dem Geschwindigkeitsvektor einen Winkel von >135°. Die Projektionen der beiden weiteren Kanten (19 und 2o) auf den Aufzeichnungsträger liegen senkrecht zum Geschwindigkeitsvektor (22). Mit Hilfe eines derartigen Eindringkörpers ist ein Prägen eines digitalen Signals möglich, das mit einem Laserstrahl ausgelesen wird.

Fig. 2

EP 0 255 649 A2

## Anordung zur Aufzeichnung eines Informationssignales

Die Erfindung betrifft eine Anordnung zur Aufzeichnung eines Informationssignals, insbesondere auf einen plattenförmigen, metallischen Aufzeichnungsträger nach dem Oberbegriff des Anspruchs 1.

Das Einschneiden eines analogen Informationssignals in die Oberfläche eines plattenförmigen Aufzeichnungsträgers mit Hilfe eines Schneidstichels ist bekannt. Das ursprüngliche Einschneiden in eine Lackfolie ist in den letzten Jahren verstärkt durch Einschneiden in einen metallischen Aufzeichnungsträger ersetzt worden. Dadurch wurden die Formtreue der eingeschnittenen Rille erhöht sowie mehrere Zwischenstufen zur Herstellung einer Schallplatte ausgeschaltet.

Daneben gewinnt die digitale Schall-und Datenaufzeichnung zunehmend an Bedeutung, bei der durch komplizierte optische und chemische Prozesse eine Information mit Hilfe eines Laserstrahls auf einen Aufzeichnungsträger aufgezeichnet und mit einem Laserstrahl ausgelesen wird. Dieser Art der Aufzeichnung zeichnet sich zwar durch besonders gute akustische Eigenschaften und verbesserte Handhabung des fertigen Aufzeichnungsträgers aus, jedoch ist die Herstel lung einer derartigen sogenannten CD-Platte (Compact-Disc) ungleich aufwendiger als die analoge Aufzeichnung mit Hilfe eines Schneidstichels.

Aus der DE-PS 35 27 606 ist ein Verfahren zur Aufzeichnung eines digitalen Informationssignals, insbesondere eines Audiosignals im CD-Format, bekannt, bei dem das Signal mit Hilfe eines senkrecht zum Aufzeichnungsträger angetriebenen Prägestichels zwischen zwei aufeinanderfolgenden Vertiefungen des aufzuzeichnenden Signals oberhalb und in den Vertiefungen unterhalb der unverformten Oberfläche des Aufzeichnungsträgers befindet.

Mit Hilfe dieses bekannten Vefahrens ist die Aufzeichnung eines rein digitalen Signals, dessen Informationsgehalt durch die Länge und den Abstand zweier aufeinanderfolgender Vertiefungen auf dem Aufzeichnungsträger bestimmt ist, grundsätzlich möglich.

Es ist bekannt, daß optische Abtastsysteme Beugungsbilder der Oberflächenstruktur auswerten. Es hat sich gezeigt, daß der für die Compact-Disc standardisierte Laserabtaster auch aus im Querschnitt nicht rechteckförmig hergestellten Oberflächenstrukturen Signale detektiert.

Der Erfindung liegt daher die Aufgabe zugrunde, eine Anordnung zur Aufzeichnung eines Informationssignals, das in Form einzelner aufeinanderfolgender Vertiefungen auf dem Aufzeichnungsträger aufgezeichnet wird, anzugeben, die unter Verwendung eines Eindringkörpers die Ausbildung einer derartigen Signalspur auf dem Aufzeichnungsträger ermöglicht, die als Vorstufe für eine mit einem Laser abtastbare Aufzeichnungsträgerplatte dient. Der Erfindung liegt weiter die Auf gabe zugrunde, die Ausbildung eines Eindringkörpers anzugeben, der im Prägebetrieb keine Aufzeichnungsverzerrungen bewirkt, die bei Abtasten mit einem Laserstrahl zu Signalstörungen führen würden.

Diese Aufgabe wird durch die im Anspruch 1 angegebene Erfindung gelöst. Vorteilhafte Weiterbildungen der Erfinsung sind in Unteransprüchen angegeben.

Der erfindungsgemäße Eindringkörper, der als Prägestichel eingesetzt ist, ist in einer ausgeführten Anordnung als schiefwinklige Pyramide ausgebildet, deren eine Seitenfläche im rechten Winkel zur Laufrichtung des Aufzeichnungsträgers sowie parallel zur Anregungsrichtung des Stichels ausgerichtet ist. Die Seitenkanten dieser Fläche bestimmen dabei die seitlichen Flankenwinkel der aufgezeichneten Signalvertiefungsfolge. Bei Verwendung des Eindringkörpers als Prägestichel entsteht kein Span. Der geprägte Aufzeichnungsträger kann daher bereits unmittelbar nach der Herstellung durch eine Abtastung mit Hilfe eines Lasers geprüft werden. Die bevorzugten Winkel der Stichelkanten in der erfindungsgemäßen Anordnung bewirken, daß weder Intermodulationen, Zeitverschiebungen, noch Aus-und Austrittsverzerrungen auftreten, die eine Signalverfälschung beim Auslesen des Informationsträgers ergeben würden.

Der Eindringkörper gemäß der Erfindung ist einfach herzustellen. Zur Aufzeichnung des Informationssignals ist kein Lasertrahl erforderlich, und die Aufzeichnung kann unter üblichen Bedingungen der Schallplattenindustrie erfolgen, d. h. es sind keine Reinstraumbedingungen erforderlich, wie sie bei der Laseraufzeichnung zu fordern sind.

Die Erfindung wird nachstehend anhand eines Ausführungsbeispieles näher erläutert. Die Figuren zeigen:

Fig. 1 eine Anordnung in Rückansicht,
Fig. 2 eine Anordnung in Seitenansicht,
Fig. 3 eine Anordnung in Aufsicht,
Fig. 4 eine Signalfolge auf dem Informationsträger,
Fig. 5 eine Querschnittsansicht einer eingeprägten Informationsspur.

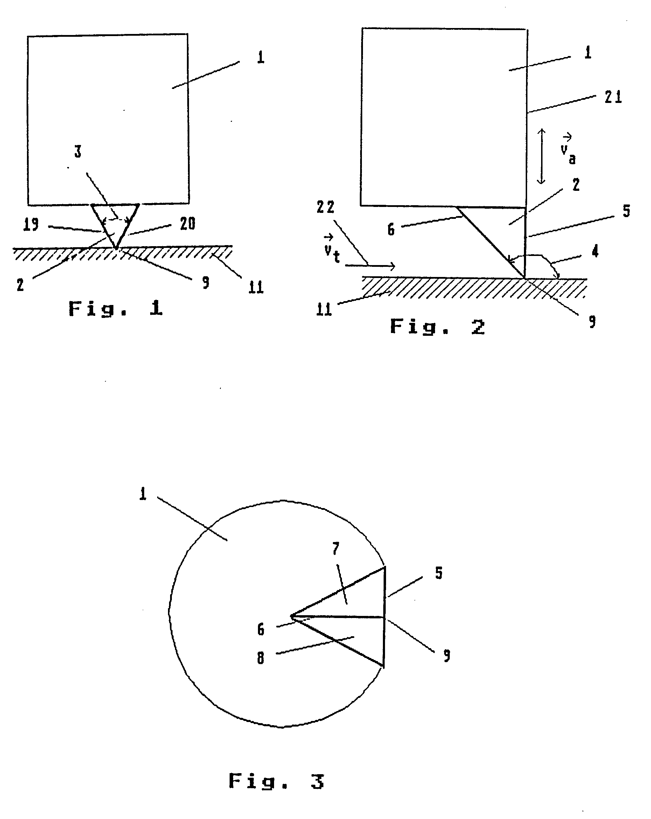

In Fig. 1 ist ein Stellglied 1 dargestellt, das auf einer Unterseite einen Eindringkörper 2 trägt. Das Stellglied ist z. B. ein Piezoschwinger, an dem der Eindringkörper 2 befestigt ist. Der Aufbau einer derartigen Anordnung ist z. B. aus der DE-PS 35 27 606 bekannt.

Der Eindringkörper besteht vorzugsweise aus Diamant und weist eine dreieckförmige Grundfläche auf, die an dem Stellglied befestigt ist. Die Pyramidenform des Eindringkörpers ist derart schiefwinklig ausgebildet, daß die Projektionen zweier Kanten 19 und 20 auf den Aufzeichnungsträger mit dem Geschwindigkeitsvektor des Aufzeichnungsträgers $\overrightarrow{V_t}$ einen rechten Winkel bilden. Die durch die Kanten 19 und 20 gebildete Seitenfläche ist parallel zur Erregungsrichtung und im rechten Winkel zur Aufzeichnungsrichtung angeordnet. Die beiden Kanten 19 und 20 bestimmen die seitlichen Flankenwinkel der aufgezeichneten Signalspur.

Es hat sich gezeigt, daß der für die Compact-Disc standardisierte Laserabtaster aus den erfindungsgemäß hergestellten Signalstrukturen Signale detektiert, die die gleiche Modulationstiefe aufweisen, wie aus Strukturen, die die früher als notwendig angenommene $\lambda/4$-Bedingung erfüllen. Die Kanten 19 und 20 laufen daher vorzugsweise zu einer Spitze 9 zusammen, die im Ruhebetrieb des Eindringkörpers auf der Oberfläche des Informationsträgers aufliegt. Im Arbeitsbetrieb prägt der Eindringkörper einzelne Vertiefungen mit gleichbleibender Tiefe in die Oberfläche des Aufzeichnungsträgers, wobei diese Tiefe vorzugsweise etwa 0,2 µ beträgt. Zwischen zwei Vertiefungen tritt die Spitze 9 des Eindringkörpers so weit hervor, daß diese sich gerade an der Oberfläche des Aufzeichnungsträgers befindet.

Fig. 2 zeigt die erfindungsgemäße Anordnung von der Seite. Es wird dargestellt, daß die Brustfläche 5 im rechten Winkel zum Geschwindigkeitsvektor und damit zur Laufrichtung des Informationsträgers 11 liegt. Die beiden anderen Seiten 7 und 8 des Eindringkörpers 2 laufen zu einer Kante 6 zusammen, die die Kufe des Eindringkörpers bildet. Diese Kufe steht bei der Aufzeichnung in einem Winkel $\alpha(4)$ zum Aufzeichnungsträger. Der Winkel $\alpha$ muß größer als 135° sein, da nur unter dieser Bedingung eine spanlose Verformung erreicht wird. Er sollte aber nicht größer als 150 - 155° sein, um ausreichende Pegel zu erzeugen. Die mögliche Variationsbreite des Winkels beträgt daher nur etwa 20°.

Im Prägebetrieb läuft der Aufzeichnungsträger an dem Eindringkörper 2 in Richtung des Geschwindigkeitsvektors 22 vorbei. Bei Erregung des Eindringkörpers 2 senkrecht zur Oberfläche des Aufzeichnungsträgers tritt die Kufe 6 in den Aufzeichnungsträger ein und formt an den Kanten 19 und 20 der Fläche 5 die Seitenflanken der aufzuzeichnenden Vertiefung.

Damit beim Ausfahren des Eindringkörpers aus dem Aufzeichnungsträger die Kufe 6 keine Signalverfälschung hervorruft, ist ein gewisser Freiwinkel erforderlich. Deshalb soll die Bedingung

$$|tg\ \alpha|\ >\ \frac{|\overrightarrow{V_a}|}{|\overrightarrow{V_t}|}$$

erfüllt sein, wobei $|\overrightarrow{V_a}|$ die Geschwindigkeitskomponente der Spitze senkrecht zum Aufzeichnungsträger und $|\overrightarrow{V_t}|$ den Geschwindigkeitsvektor des Aufzeichnungsträgers am Ort der Aufzeichnung darstellt.

Damit die Brustfläche 5 und damit die Kanten 19 und 20 bei Abnutzungserscheinungen in leichter Weise nachzupolieren sind, ohne daß der Eindringkörper von dem Stellglied 1 abzunehmen ist, liegt eine Mantellinie 21 in der Ebene der Brustfläche 5. Dies ermöglicht das Polieren des Eindringkörpers im mit dem Stellglied 1 fest verbundenen Zustand.

Fig. 3 zeigt die erfindungsgemäße Anordung in Aufsicht. Der Eindringkörper weist eine etwa dreieckförmige Grundfläche auf. Die Projektionen der Kanten 19 und 20 liegen im rechten Winkel zum Geschwindigkeitsvektor $\overrightarrow{V_t}$ an der Oberfläche des Aufzeichnungsträgers am Ort der Aufzeichnung. Die beiden Seitenflächen 7 und 8 des Eindringkörpers laufen an der Kufe 6 zusammen, die von der Grundfläche zur Spitze 9 des Eindringkörpers verläuft und deren Projektion auf die Oberfläche des Aufzeichnungsträgers im rechten Winkel zur Projektion der Kanten 19 und 20 liegt.

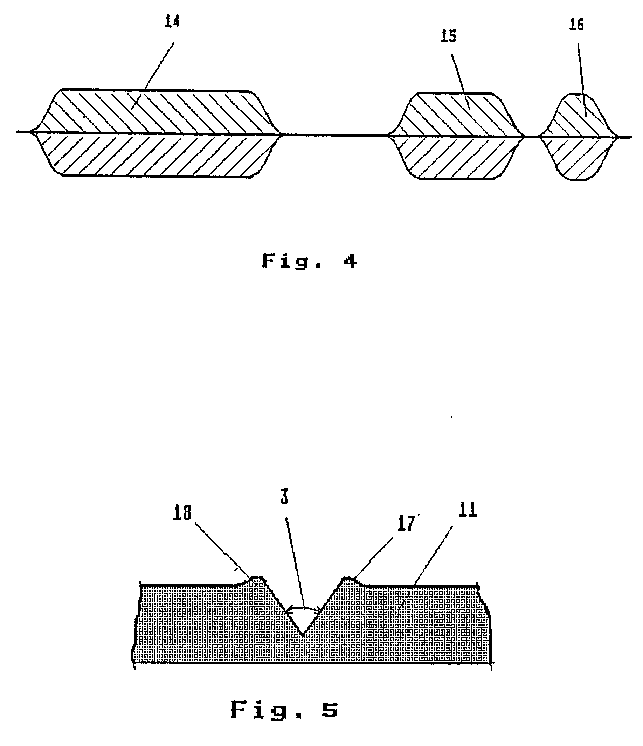

Fig. 4 zeigt eine mit der erfindunsgemäßen Anordnung hergestellte Signalspur. Es sind einzelne Vertiefungen 14, 15 und 16 dargestellt. Entlang der einzelnen Vertiefungen verbleibt die Form dieser Vertiefungen im wesentlichen unverändert. Das Austreten des Prägestichels aus den Vertiefungen erfolgt so weit, daß der Scheitelpunkt der Bewegungsbahn der Spitze 9 des Eindringkörpers bis an die Oberfläche herantritt, so daß zwischen zwei Vertiefungen kein Einprägen einer Signalinformation erfolgt. Die Vertiefung 15 zeigt die Aufzeichnung mit der Grenzfrequenz des Stellgliedes und ist deshalb sinusförmig. Impulse tieferer Wiederholfrequenz werden im Ein-und Austauchbereich entsprechend der Grenzfrequenzbedingungen aufgezeichnet.

Fig. 5 zeigt die Ansicht einer Vertiefung im Querschnitt. Eine derartige Vertiefung ist durch einen Prägestichel ausgebildet, welches dazu führt, daß an der Seite der Vertiefungen zwei Überhöhungen 17 und 18 auftreten. Dieser sogenannten "Ohren" stören jedoch nicht weiter, da sie bei der weiteren Verarbeitung des Aufzeichnungsträgers und Reproduktion über Spritzpressen nicht abgeformt werden, so daß der fertige Aufzeichnungsträger diese "Ohren" nicht enthält. Diese Ohren stören ebenfalls nicht beim unmittelbaren Auslesen des Aufzeichnungsträgers mit Hilfe eines Laserstrahls, da diese nur Einfluß auf die auszulesende Signalamplitude haben. Durch die noch nicht vorhandene Deckschicht auf dem soeben geschittenen Aufzeichnungsträger muß ohnehin eine andere Laserfrequenz verwendet werden, so daß hier ohne weiteres eine Anpassung vorgenommen werden kann, die zur Erreichung einer ausreichend hohen Amplitude führen kann. Der Flankenwinkel 3 zwischen den seitlichen Flanken der Vertiefung beträgt etwa 60 - 80°. Dies reicht aus, um entsprechende Beugungserscheinungen zu verursachen, die das Auslesen mit Hilfe eines Laserstrahls ermöglichen. Der Winkel 3 entspricht dem Winkel $\beta$ zwischen den Kanten 19 und 20 der Brustfläche 5 des Eindringkörpers 2.

Da das Ausleselicht bei einem fertigen Aufzeichnungsträger senkrecht auf die Oberfläche des Aufzeichnungsträgers fällt, bewirkt ein von der Senkrechten abweichender Flankenwinkel der Brustfläche 5 gegenüber dem Aufzeichnungsträger Frequenzintermodulationen. Diese sind zwar theoretisch elektronisch ausgleichbar, jedoch kann auf derartige elektronische Zeitkorekturmaßnahmen verzichtet werden, wenn die Brustfläche zum Aufzeichnungsträger in gleicher Richtung wie der Lichtstrahl des Auslesesignals relativ zum Aufzeichnungsträger angeordnet ist.

Die erfindungsgemäße Anordnung ermöglicht die digitale Aufzeichnung durch Prägen in einen metallischen Aufzeichnungsträger, von dem unmittelbar Abzüge angefertigt werden können. Damit entfallen sämtliche Schritte der Entwicklung, Versilberung usw., wie sie bei der Aufzeichnung des dititalen Signals mit Hilfe eines Lasers in eine photoempfindliche Schicht notwendig sind.

Durch entsprechenden Schliff des Eindringkörpers können die Flankenwinkel der aufgezeichneten Vertiefungen sehr genau eingehalten werden. Die hierfür bei der Laseraufzeichnung erforderlichen umfangreichen Korrekturen können gänzlich entfallen.

Bezugszeichenliste:

1 Stellglied
2 Eindringkörper
3 Winkel $\beta$
4 Winkel $\alpha$
5 Brustfläche
6 Kufe
7 Seitenfläche
8 Seitenfläche
9 Spitze
11 Aufzeichnungsträger
14 Signalspur
15 Signalspur
16 Signalspur
17 Überhöhung
18 Überhöhung
19 Kante
20 Kante
21 Mantellinie
22 Geschwindigkeitsvektor $\overrightarrow{V_t}$

**Ansprüche**

1. Anordnung zur Aufzeichnung eines Informationssignals, insbesondere auf einen plattenförmigen, metallischen Aufzeichnungsträger (11), bei der das Informationssignal mit einem Eindringkörper (2) in Form eines Diamanten als Folge von einzelnen Vertiefungen (14, 15, 16) in den Informationsträger eingeprägt wird, dadurch gekennzeichnet, daß der Eindringkörper (2) eine Pyramidenform mit wenigstens drei Kanten (6, 19, 20) aufweist, die in einer Spitze (9) zusammenlaufen, die beim Prägen in die Oberfläche des Aufzeichnungsträgers eindringen, wobei eine Kante (6), deren Projektion in die Aufzeichnungsebene in der Richtung des Geschwindigkeitsvektors $\vec{V_t}$ des Aufzeichnungsträgers liegt, mit dem Geschwindigkeitsvektor $\vec{V_t}$ einen Winkel α (4) bildet, der der Bedingung

$$180° - \text{arc tg} \, \frac{|\vec{V_a}|}{|\vec{V_t}|} \, > \, \alpha \, > \, 135°$$

genügt, wobei $V_a$ die Geschwindigkeitskomponente der Spitze (9) senkrecht zum Aufzeichnungsträger (11) ist, und die Projektionen von zwei weiteren Kanten (19, 20) in die Aufzeichnungsebene senkrecht zur Richtung des Geschwindigkeitsvektors $\vec{V_t}$ liegen.

2. Anordnung nach Anspruch 2, dadurch gekennzeichnet, daß der eingeschlossene Winkel (3) zwischen den weiteren Kanten (19, 20) 60° - 80° beträgt.

3. Anordnung nach den Ansprüchen 1 oder 2, bei der der Eindringkörper an einem Stellglied (1) befestigt ist, dadurch gekennzeichnet, daß eine Mantellinie des etwa kreisförmigen Stellgliedes (1) in der durch die weiteren Kanten (19, 20) des Eindringkörpers gegebenen Ebene (5) liegt.

Fig. 1

Fig. 2

Fig. 3

14

15

16

**Fig. 4**

18  3  17  11

**Fig. 5**